(19) Europäisches Patentamt
European Patent Office
Office européen des brevets

(11) EP 2 149 397 A2

(12) EUROPEAN PATENT APPLICATION

(43) Date of publication:
03.02.2010 Bulletin 2010/05

(51) Int Cl.:
B01D 63/02 (2006.01)     B01D 63/06 (2006.01)
B01D 61/36 (2006.01)

(21) Application number: 09251903.2

(22) Date of filing: 29.07.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 29.07.2008 US 220877

(71) Applicant: MILTON ROY COMPANY
Ivyland, PA 18974-0577 (US)

(72) Inventors:
• Ma, Zidu
Ellington, CT 06029 (US)
• Irish, James R.
Middlefield, CT 06455 (US)
• Liao, Xiaohong
South Windsor, CT 06074 (US)

(74) Representative: Tomlinson, Kerry John
Frank B. Dehn & Co.
St Bride's House
10 Salisbury Square
London
EC4Y 8JD (GB)

(54) **System and method for membrane distillation**

(57) A distillation system and method includes open reservoirs (12,14) and pluralities of hollow fiber membranes (38) and hollow tubes (46) extending through portions of separate open reservoirs. The hollow fiber membranes are configured to allow vapor transmission, and the hollow tubes are configured to substantially prevent vapor transmission but allow transmission of thermal energy. Feed solution is circulated through the open reservoirs. Distillate is separated from the feed solution by the hollow fiber membranes and thermal energy is recouped through the hollow tubes.

FIG. 1

EP 2 149 397 A2

**Description**

BACKGROUND

The present invention relates to distillation systems for liquid treatment processes. In particular, the present invention relates to distillation systems containing hollow fiber membranes for separating distillate fluids from feed solutions in liquid treatment processes.

In recent years, membrane distillation has become increasingly popular in a variety of fluid-treatment applications. The membranes are typically hydrophobic and microporous to keep the feed solution separated from that of the distillate during operation. Both hollow fiber and flat sheet membranes have been used in developmental programs. For direct contact membrane distillation, hollow fiber membranes are typically employed in tube/shell configurations, where bundles of hollow fiber membranes are arranged along the longitudinal axes of distillation modules. Each hollow fiber membrane in the bundle is typically a hydrophobic, microporous membrane having an exterior surface and an inner hollow tubular region. The exterior surfaces of the hollow fiber membranes face a shell side of the module, which is the portion of the module containing the feed solution. The inner hollow tubular regions define a tube side of the module, which provides a conduit for collecting the distillate fluids separated from the feed solution.

During membrane distillation, the feed solution is typically preheated to form a temperature differential across the hollow fiber membranes. This temperature differential creates a vapor pressure differential between the shell side and the tube side of the fiber membranes in the module, which causes a portion of the feed solution to evaporate near the pore entrance on the feed solution side and the vapor to transmit through the hollow fiber membranes. The transmitted vapor then condenses at a gas/liquid interface near the pore entrance of the membranes on the distillate side, thereby providing the desired distillate. Because the vaporization of a liquid is involved in the separation process, a large amount of thermal energy is transferred from the feed solution to the distillate. A large amount of energy is also expended by pumps which circulate feed solution and distillate on both sides of the membranes. Being able to both reduce the pumping pressure and recoup the thermal energy significantly affects the overall efficiency of the membrane distillation processes. Thus, there is an ongoing need for low pumping pressure requirements and recuperation of thermal energy during the distillation process.

Most membrane distillation systems operate with high Reynolds numbers on the feed solution side of the membrane. While a high Reynolds number on the feed solution side may offer an advantage in terms of improved mass transfer through the minimization of temperature and concentration polarization, a distillation system with a high Reynolds number offers several disadvantages. First, a high Reynolds number increases conductive heat loss. Excessive heat transfer across membranes during distillation is not desired. Second, a high Reynolds number generally requires a high pumping pressure, which requires significant amounts of energy. Even small increases in pumping pressure may result in significant increases in pump power draw. In many membrane distillation systems, the feed solution circulation flow is often ten to twenty times that of the distillate production flow. Pumping large amounts of feed solution at high pressure requires a large amount of energy. Thus, there is also an ongoing need for distillation systems with the capability to reduce conductive heat loss and energy consumption during the distillation process.

SUMMARY

Embodiments of the present invention include a distillation system having first and second reservoirs open to the atmosphere (open reservoirs), a feed loop for circulating feed solution to the reservoirs, and a distillate loop. The distillate loop includes a first distillate inlet manifold and a first distillate outlet manifold and a plurality of hollow fiber membranes extending between the first manifolds. The hollow fiber membranes extend through a portion of the first reservoir and are configured to allow vapor transmission. The distillate loop also includes second distillate inlet manifold and a second distillate outlet manifold and a plurality of hollow tubes extending between the second manifolds. The hollow tubes extend through a portion of the second reservoir and are configured to prevent vapor transmission but allow the transmission of thermal energy.

One exemplary embodiment of the present invention includes a distillation system having a first reservoir open to the atmosphere, a first distillate inlet manifold, a first distillate outlet manifold, and a plurality of hollow fiber membranes. The hollow fiber membranes extend from the first inlet manifold to the first outlet manifold and through at least a portion of the first reservoir. The hollow fiber membranes are configured to allow vapor transmission. The distillation system also has a second reservoir open to the atmosphere, a second distillate inlet manifold, a second distillate outlet manifold, and a plurality of hollow tubes. The hollow tubes extend from the second inlet manifold to the second outlet manifold and through at least a portion of the second reservoir. The hollow tubes are configured to prevent vapor transmission but allow the transmission of thermal energy.

A further exemplary embodiment of the present invention includes a method for separating a distillate from a feed solution in a reservoir open to the atmosphere. The method includes introducing the feed solution into a feed loop.

The feed solution is heated and then circulated through a first reservoir open to the atmosphere and containing a plurality of hollow fiber membranes configured to allow transmission of distillate. The feed solution is then circulated through a second reservoir open to the atmosphere and containing a plurality of hollow tubes configured to prevent transmission of distillate but to allow transmission of thermal energy. Distillate collected in the hollow fiber membranes present in the first reservoir is circulated to the hollow tubes present in the second reservoir. Thermal energy is transferred from the distillate in the hollow tubes to the feed solution in the second reservoir. After the distillate exits the hollow tubes, it is cooled and circulated to the hollow fiber membranes.

BRIEF DESCRIPTION OF THE DRAWINGS

FIG. 1 is a schematic illustration of a distillation system open to the atmosphere.
FIG. 2A is a schematic illustration of an open reservoir and a distillate-collecting portion of a distillate loop.
FIG. 2B is a schematic illustration of an open reservoir with a baffle and a distillate-collecting portion of a distillate loop.
FIG. 2C is a schematic illustration of an open reservoir and a heat-transferring portion of a distillate loop.
FIG. 3A is an expanded sectional view of one embodiment of a hollow fiber membrane configured to allow vapor transmission.
FIG. 3B is an expanded sectional view of one embodiment of a hollow tube configured to prevent vapor transmission but allow thermal transmission.
FIG. 3C is an expanded sectional view of an alternate embodiment of a hollow tube configured to prevent vapor transmission but allow thermal transmission.

DETAILED DESCRIPTION

In membrane distillation processes, conventional wisdom is to minimize temperature and concentration polarization by increasing flow turbulence on the surface of the membrane. For example, membranes in the form of hollow fibers or flat sheets (spiral wound) are packaged into an enclosure as a contactor ("closed" system), which allows liquids to flow at greater than one atmosphere. Since distillation processes are thermally driven, i.e. the overall mass transfer is controlled by a temperature differential between the feed solution side and the distillate side, in some cases certain temperature and/or concentration polarization can be tolerated. According to the present invention, it is possible to promote distillation at a feasible rate across a membrane in a system that is open to the atmosphere (i.e. generally ambient pressure) utilizing temperature and flow of the feed solution at a very low Reynolds number. Here, "open" means that the reservoirs are open to the atmosphere. Open reservoirs may be covered to prevent environmental contaminants from entering the reservoirs, but covered reservoirs are still at ambient atmospheric pressure.

The Reynolds number may be described as the ratio of inertial forces to viscous forces and, consequently, it quantifies the relative importance of these two types of forces for given flow conditions. The Reynolds number is also used to identify and predict different flow regimes, such as laminar or turbulent flow. Laminar flow occurs at low Reynolds numbers, where viscous forces are dominant, and is characterized by smooth, constant fluid motion, while turbulent flow, on the other hand, occurs at high Reynolds numbers and is dominated by inertial forces, which tend to produce random eddies, vortices and other flow fluctuations.

Typically the Reynolds number is given as follows:

$$Re = \frac{\rho v_s^2 / L}{\mu v_s / L^2} = \frac{\rho v_s L}{\mu} = \frac{v_s L}{\nu} = \frac{\text{Inertial forces}}{\text{Viscous forces}}$$

where:

$v_s$ is the mean fluid velocity in $ms^{-1}$
$L$ is the characteristic length in m
$\mu$ is the (absolute) dynamic fluid viscosity in $Nsm^{-2}$ or Pa·s
$\nu$ is the kinematic fluid viscosity, defined as $\nu = \mu/\rho$, in $m^2s^{-1}$
$\rho$ is the density of the fluid in $kgm^{-3}$

Membrane distillation systems capable of operating with very low Reynolds numbers offer certain advantages over other membrane distillation systems. First, a low Reynolds number on the feed solution side reduces conductive heat loss. Any conductive heat transfer across the membranes during distillation is not desired. Second, a low Reynolds number requires pumping the feed solution with only a low pumping pressure. Because high pressure delivery of a feed solution is not required, the pumping of the feed solution requires less power than in other distillation systems. Because the open distillation system described herein does not rely on high pressures to drive distillation, the amount of power used to pump the feed solution is reduced.

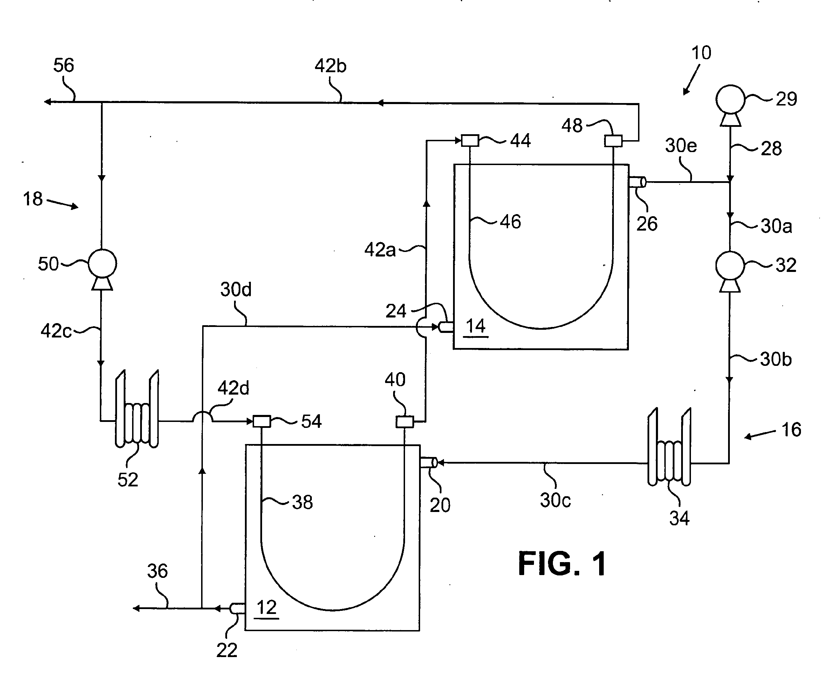

FIG. 1 is a schematic illustration of one embodiment of an open distillation system 10, which includes first open reservoir 12, second open reservoir 14, feed loop 16, and distillate loop 18. As discussed below, feed loop 16 provides a feed solution at an elevated temperature to first open reservoir 12 and to second open reservoir 14. In first open reservoir 12, distillate separates from the feed solution and passes across hollow fiber membranes 38 into distillate loop 18 due to vapor pressure differentials. The distillate flows from a segment of the distillate loop in the first open reservoir 12 to a segment of the distillate loop in the second open reservoir 14, where it transfers thermal energy to the feed solution in the second open reservoir 14.

Examples of suitable feed solutions for use with open distillation system 10 include solutions containing compounds that are separable by vapor pressure differentials across hydrophobic, microporous membranes, such as seawater, brackish water, and other aqueous brine solutions for water and wastewater treatment processes. As used herein, the term "solution" refers to a carrier liquid that contains one or more solids that are fully dissolved, partially dissolved, dispersed, emulsified, or otherwise suspended in the carrier liquid(s). For example, the feed solution may be an aqueous brine solution containing salt that is at least partially dissolved in a water carrier. In this example, open distillation system 10 may be used to separate at least a portion of the water from the aqueous brine solution to provide clean water as the distillate. Open distillation system 10 also includes standard fluid processing equipment (not shown), such as process control units, fluid pumps, and filters.

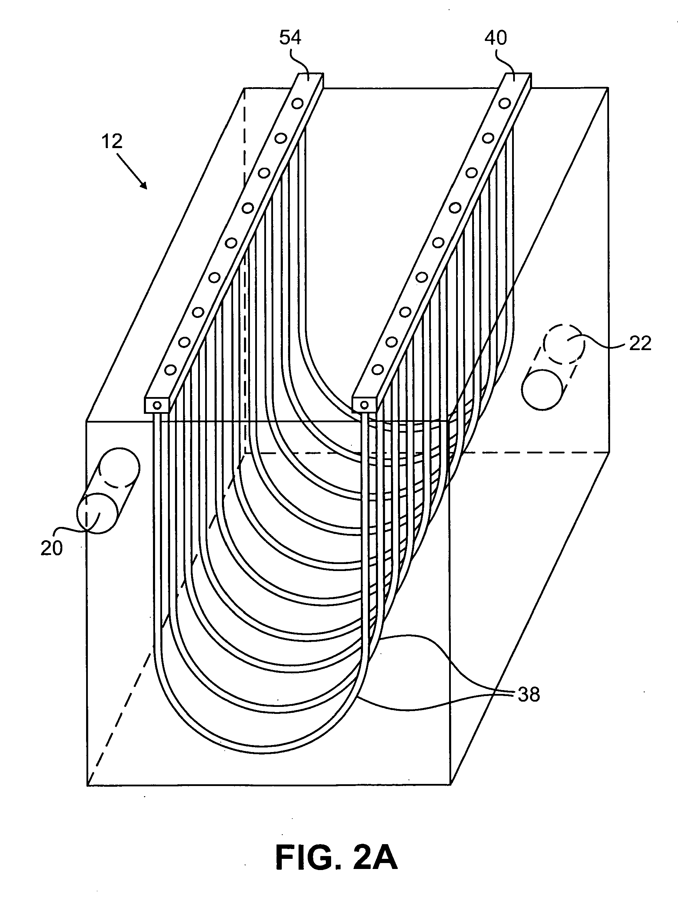

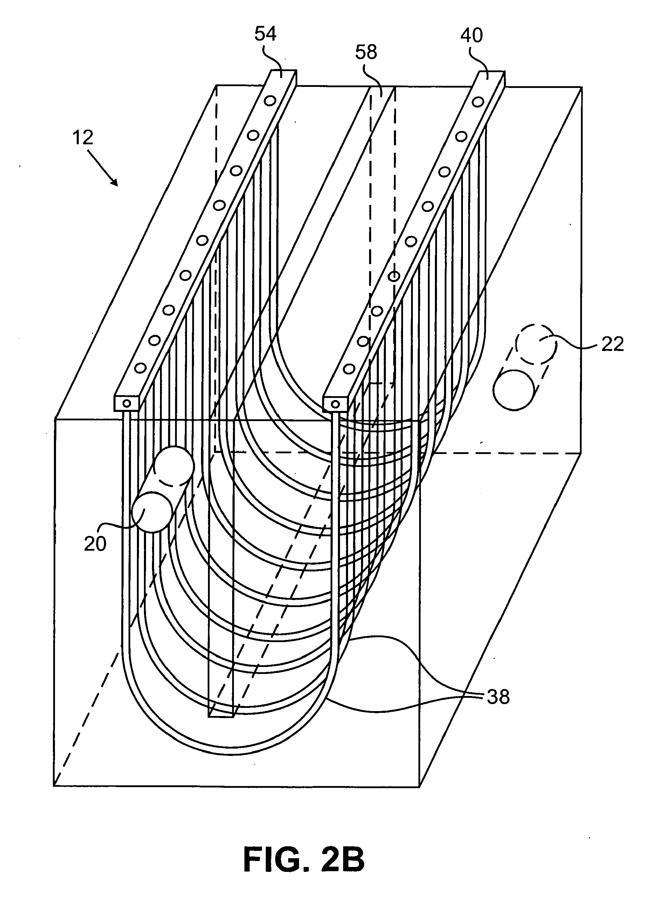

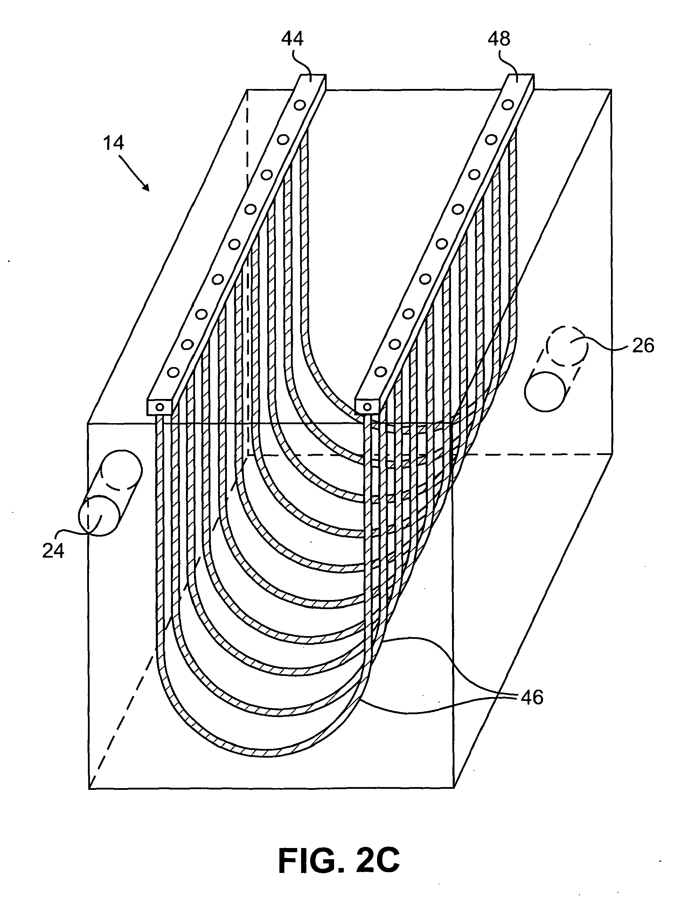

First open reservoir 12 is a reservoir or tank capable of containing the feed solution delivered by feed loop 16 and hollow fiber membranes 38 of distillate loop 18. First open reservoir 12 includes a feed solution inlet 20 and feed solution outlet 22. Feed solution inlet 20 is in fluid communication with feed loop 16 and permits delivery of feed solution to first open reservoir 12. Feed solution outlet 22 is in fluid communication with feed loop 16 and permits delivery of feed solution from first open reservoir 12. For example, in FIGS. 1 and 2, feed solution inlet 20 is located near the top of first open reservoir 12 and feed solution outlet 22 is located near the bottom of the reservoir. Other locations for the feed solution inlet 20 and outlet 22, such as the bottom surface of first open reservoir 12, are also possible. Feed solution within first open reservoir 12 and outside of hollow fiber membranes 38 is on the shell side of open distillation system 10.

Second open reservoir 14 is a reservoir or tank capable of containing the feed solution delivered by feed loop 16 and hollow tubes 46 of distillate loop 18. Second open reservoir 14 includes a feed solution inlet 24 and feed solution outlet 26. Feed solution inlet 24 is in fluid communication with feed loop 16 and permits delivery of feed solution to second open reservoir 14. Feed solution outlet 26 is in fluid communication with feed loop 16 and permits delivery of feed solution from second open reservoir 14. For example, in FIG. 1, feed solution inlet 24 is located near the bottom of second open reservoir 14 and feed solution outlet 26 is located near the top of the reservoir. Other locations for the feed solution inlet 24 and outlet 26, such as the bottom surface of second open reservoir 14, are also possible. Feed solution within second open reservoir 14 and outside of hollow tubes 46 is on the shell side of open distillation system 10.

Feed loop 16 is a fluid pathway for the feed solution, and includes feed source line 28, feed conveyance lines 30a-30e, feed circulation pump 32, heat exchanger 34, and feed discharge line 36 in addition to first 12 and second 14 open reservoirs and their corresponding feed solution inlets 20, 24 and outlets 22, 26. Feed source line 28 is a valve-controlled fluid conduit for transferring the feed solution from a feed solution source (not shown) to feed loop 16. Pump 29 may be used to transfer feed solution from the feed solution source into feed loop 16. During operation of open distillation system 10, portions of the feed solution are separated within first open reservoir 12 to provide the desired distillate in distillate loop 18. As such, feed source line 28 provides additional feed solution to mix with residual feed solution (feed solution that has passed through first open reservoir 12) and balance the flow of feed solution in feed loop 16.

Feed conveyance lines 30a-30e are fluid conduits for feed loop 16, and provide a clockwise flow path in the embodiment shown in FIG. 1. Feed conveyance line 30a connects feed source line 28 and feed conveyance line 30e to fluid pump 32. Feed conveyance line 30b connects feed circulation pump 32 to heat exchanger 34. Feed conveyance line 30c connects heat exchanger 34 to feed solution inlet 20 of first open reservoir 12. Feed conveyance line 30d connects feed solution outlet 22 of first open reservoir 12 to feed solution inlet 24 of second open reservoir 14. Feed conveyance line 30e connects feed solution outlet 26 of second open reservoir 14 to feed conveyance line 30a, completing the feed loop. Feed conveyance line 30d is also connected to feed discharge line 36, which is a valve-controlled fluid conduit for purging a portion of the residual feed solution.

Feed circulation pump 32 is a pump that interconnects feed conveyance lines 30a and 30b, and is configured to deliver the feed solution within feed loop 16 to the first 12 and second 14 open reservoirs. As discussed below, the feed solution is maintained in a liquid phase to prevent contaminants of the feed solution from mixing with the desired distillate in distillate loop 18. This would otherwise reduce the purity of the distillate, and could potentially require discarding the distillate product. The pressure of the feed solution in first open reservoir 12 on hollow fiber membranes 38 is also less than a liquid penetration pressure of the hollow fiber membranes 38 (first tubes) of distillate loop 18. The liquid penetration pressure is the pressure at which liquid from the feed solution penetrates through the pores of hollow fiber membranes 38 (first tubes) of distillate loop 18 (i.e., from the shell side to the first tube side), and is a function of several factors, such as the average pore radius of the membranes and the average liquid contact angle of the membranes (i.e., hydrophobicity of the membranes). Liquid penetration of the feed solution from the shell side into the first tube side of distillate loop 18 may result in the contamination of the distillate, thereby reducing the purity of the distillate.

Heat exchanger 34 is a heat-providing heat exchanger that interconnects feed conveyance lines 30b and 30c, thereby increasing the temperature of the feed solution passing from feed conveyance line 30b to feed conveyance line 30c. Accordingly, heat exchanger 34 heats the feed solution to an elevated temperature before it enters first open reservoir 12. As discussed below, heating the feed solution allows the feed solution to enter first open reservoir 12 at an elevated temperature to increase the separation rate of distillate from first open reservoir 12 to distillate loop 18.

The elevated temperature of the feed solution entering first open reservoir 12 is less than a thermal degradation temperature of the hollow fiber membranes 38 (first tubes) of distillate loop 18. Examples of suitable elevated temperatures for aqueous-based feed solutions range from about 50 °C to less than about 100 °C, with particularly suitable elevated temperatures ranging from about 70 °C to about 90 °C. While open distillation system 10 is shown with a single heat exchanger (i.e., heat exchanger 34), open distillation system 10 may alternatively include multiple heat exchangers to heat the feed solution to the elevated temperature.

Distillate loop 18 is a fluid pathway for the distillate separated from the feed solution, and includes hollow fiber membranes 38, first tank distillate outlet 40, distillate conveyance lines 42a-42d, second tank distillate inlet 44, hollow tubes 46, second tank distillate outlet 48, distillate circulation pump 50, heat exchanger 52, first tank distillate inlet 54, and distillate discharge line 56. As discussed below, first and second tank distillate inlets 54, 44 are manifolds for receiving distillate and delivering distillate to pluralities of hollow fiber membranes 38 and hollow tubes 46, respectively. First and second tank distillate outlets 40, 48 are manifolds for receiving distillate from the pluralities of hollow fiber membranes 38 and hollow tubes 46, respectively.

As discussed below, hollow fiber membranes 38 are a plurality of tubular membranes that extend through first open reservoir 12 between first tank distillate inlet 54 and first tank distillate outlet 40. Distillate separates from the feed solution in first open reservoir 12 and diffuses across the hollow fiber membranes 38. Hollow tubes 46 are a plurality of tubes that extend through second open reservoir 14 between second tank distillate inlet 44 and second tank distillate outlet 48. In second open reservoir 14, thermal energy is exchanged between the distillate in hollow tubes 46 and the feed solution in the reservoir.

Distillate conveyance lines 42a-42d are fluid conduits for distillate loop 18, and provide a counter-clockwise flow path in the embodiment shown in FIG. 1. Feed conveyance line 42a connects first tank distillate outlet 40 to second tank distillate inlet 44. Feed conveyance line 42b connects second tank distillate outlet 48 to distillate circulation pump 50. Feed conveyance line 42c connects distillate circulation pump 50 to heat exchanger 52. Feed conveyance line 42d connects heat exchanger 52 to first tank distillate inlet 54. Feed conveyance line 42b is also connected to distillate discharge line 56, which is a valve-controlled fluid conduit for removing a portion of the distillate from distillate loop 18. Distillate discharge line 56 allows the distillate to be collected in a collection vessel (not shown).

Distillate circulation pump 50 is a pump that interconnects distillate conveyance lines 42b and 42c, and is configured to deliver the distillate within distillate loop 18. Heat exchanger 52 is a cooling heat exchanger that interconnects distillate conveyance lines 42c and 42d, thereby reducing the temperature of the distillate passing from distillate conveyance line 42c to distillate conveyance line 42d. Accordingly, heat exchanger 52 cools the distillate to a reduced temperature before it enters first tank distillate inlet 54. As discussed below, cooling the distillate allows the distillate to enter hollow fiber membranes 38 (first tubes) of distillate loop 18 in first open reservoir 12 at a reduced temperature to increase the separation rate of distillate from first open reservoir 12 to distillate loop 18. Suitable lowered temperatures for the distillate may vary depending on the composition of the distillate. For aqueous distillates, examples of suitable lowered temperatures range from about 5 °C to about 75 °C, with particularly suitable lowered temperatures ranging from about 20 °C to about 55 °C.

During operation, the feed solution flows through feed loop 16, and is respectively pumped by feed circulation pump 32 and heated by heat exchanger 34 to an elevated temperature. While flowing through feed loop 16, the feed solution flows into first open reservoir 12 via feed solution inlet 20. Also during operation, a supply of the distillate flows through distillate loop 18, and is cooled by heat exchanger 52 to a reduced temperature. While flowing through distillate loop 18, the cooled distillate flows into the tube side of hollow fiber membranes 38 via first tank distillate inlet 54.

The respective cooled distillate and heated feed solution flowing into distillate loop 18 and first open reservoir 12 create a temperature differential between the tube side of distillate loop 18 and the shell side of first open reservoir 12. For example, a feed solution entering the shell side of first open reservoir 12 at about 80 °C and a distillate entering the tube side of distillate loop 18 disposed within first open reservoir 12 at about 40 °C provides a temperature differential of about 40 °C between the shell side and the tube side. This correspondingly provides a vapor pressure differential between the shell side and the tube side. As the temperature differential increases, the vapor pressure differential also increases. A larger vapor pressure differential increases the separation rate of the distillate from the feed solution, where the separated distillate transfers from the shell side of first open reservoir 12 to the tube side of distillate loop 18 across hollow fiber membranes 38.

After distillate enters the tube side of distillate loop 18 across hollow fiber membranes 38 in first open reservoir 12, the distillate is delivered to second tank distillate inlet 44. The distillate then travels through hollow tubes 46 to second tank distillate outlet 48 and continues through distillate loop 18. As discussed below, hollow tubes 46 are configured to prevent transfer of distillate in or out of the tube side, but are configured to transfer thermal energy from the tube side to the shell side. While the distillate is in hollow tubes 46, thermal energy is exchanged between the distillate flowing through the hollow tubes 46 and the feed solution in second open reservoir 14.

FIG. 2A illustrates a first open reservoir 12 of one embodiment of open distillation system 10. First open reservoir 12 includes feed solution inlet 20 and feed solution outlet 22 and is configured to contain feed solution. During operation, feed solution flows through and occupies a substantial portion of first open reservoir 12. As the level of feed solution in first open reservoir 12 rises above the bottom of hollow fiber membranes 38, the surface area contact between the feed solution and hollow fiber membranes 38 increases.

The dimensions of first open reservoir 12 may vary considerably. First open reservoir 12 may be sized to provide an open distillation system to suit particular needs. Some of the factors that may affect the size of the open distillation system include the type and amount of the feed solution. In one embodiment of open distillation system 10, first open reservoir 12 has a height of about 0.8 meters, a length of about 1.5 meters, and a width of about 1 meter. This embodiment provides for a reservoir having a volume of about 1.2 cubic meters. First open reservoirs 12 with smaller and larger volumes are also possible.

Positioned above first open reservoir 12 are first tank distillate inlet 54 and first tank distillate outlet 40. First tank distillate inlet 54 and first tank distillate outlet 40 are manifolds, each having a plurality of openings. Inlet 54 and outlet 40 are in fluid communication with distillate loop 18 and are connected by distillate conveyance lines 42d and 42a (not shown), respectively. Hollow fiber membranes 38 extend from openings in first tank distillate inlet 54 to openings in first tank distillate outlet 40. A substantial portion of hollow fiber membranes 38 are disposed within first open reservoir 12. In addition to the feed solution, first open reservoir 12 is also configured to contain hollow fiber membranes 38. In the embodiment illustrated in FIG. 2A, hollow fiber membranes extend downward from inlet 54 and outlet 40 in a semicircular loop fashion. Other configurations are possible that allow for adequate surface area of the hollow fiber membranes 38 to contact the feed solution flowing through first open reservoir 12.

In some embodiments of distillation system 10, first open reservoir 12 may contain one or more baffles 58. Baffles 58 serve to direct the flow of feed solution once it enters first open reservoir 12. In one embodiment, illustrated in FIG. 2B, first open reservoir 12 contains a single baffle 58 located in a central portion of first open reservoir 12 between a descending portion of hollow fiber membranes 38 and an ascending portion of hollow fiber membranes 38. Baffle 58 is arranged in a vertical position and directs the feed solution generally along the line of the membranes 38 to ensure prolonged contact of the feed solution with the membranes.

According to the embodiment illustrated in FIG. 2A, hollow fiber membranes 38 are a plurality of tubular membranes that extend between first tank distillate inlet 54 and first tank distillate outlet 40. Hollow fiber membranes 38 are formed from one or more hydrophobic, microporous materials that are capable of separating the distillate from the feed solution via vapor pressure differentials. Hollow fiber membranes 38 are generally arranged throughout the volume of the interior region of first open reservoir 12 to provide a large total membrane surface area. In the embodiment illustrated in FIG. 2A, ten hollow fiber membranes 38 substantially fill the interior region of first open reservoir 12. Greater or fewer numbers of hollow fiber membranes 38 are also possible depending on factors such as the size of first open reservoir 12, the thickness of hollow fiber membranes 38, and the type of feed solution.

FIG. 2C illustrates a second open reservoir 14 of one embodiment of open distillation system 10. Second open reservoir 14 may be very similar or identical to first open reservoir 12. Second open reservoir 14 includes feed solution inlet 24 and feed solution outlet 26 and is configured to contain feed solution. During operation, feed solution flows through and occupies a substantial portion of second open reservoir 14. As the level of feed solution in second open reservoir 14 rises above the bottom of hollow tubes 46, the surface area contact between the feed solution and hollow tubes 46 increases.

The dimensions, geometries and types of second open reservoir 14 may vary considerably. Second open reservoir 14 may be sized to provide an open distillation system to suit particular needs. Some of the factors that may affect the size of the open distillation system include the type and amount of the feed solution. In one embodiment of open distillation system 10, second open reservoir 14 has the same dimensions as first open reservoir 12. Second open reservoir has a height of about 0.8 meters, a length of about 1.5 meters, and a width of about 1 meter. This embodiment provides for a reservoir having a volume of about 1.2 cubic meters. Second open reservoirs 14 with smaller and larger volumes are also possible. Second open reservoir 14 is not required to have the same dimensions as first open reservoir 12.

Positioned above second open reservoir 14 are second tank distillate inlet 44 and second tank distillate outlet 48. Second tank distillate inlet 44 and second tank distillate outlet 48 are manifolds, each having a plurality of openings. Inlet 44 and outlet 48 are in fluid communication with distillate loop 18 and are connected by distillate conveyance lines 42a and 42b (not shown), respectively. Hollow tubes 46 extend from openings in second tank distillate inlet 44 to openings in second tank distillate outlet 48. A substantial portion of hollow tubes 46 are disposed within second open reservoir 14. In addition to the feed solution, second open reservoir 14 is also configured to contain hollow tubes 46. In the embodiment illustrated in FIG. 2C, hollow tubes extend downward from inlet 44 and outlet 48 in a semicircular loop fashion. Other configurations are possible that allow for adequate surface area of the hollow tubes 46 to contact the feed solution flowing through second open reservoir 14. If desired, second open reservoir 14 may include one or more baffles to shape the flow of the feed solution, in a similar manner as described with reference to Figure 2B.

According to the embodiment illustrated in FIG. 2C, hollow tubes 46 are a plurality of hollow tubes that extend between second tank distillate inlet 44 and second tank distillate outlet 48. Hollow tubes 46 have non-porous and solid walls. Thus, hollow tubes 46 prevent the transfer of distillate to the feed solution and the transfer of feed solution to the distillate across their non-porous and solid walls. Hollow tubes 46 are formed from materials that are capable of transferring heat from one side of the tube to the other. Hollow tubes 46 are generally arranged throughout the volume of the interior region of second open reservoir 14 to provide a large total tube surface area. In the embodiment illustrated in FIG. 2C, ten hollow tubes 46 substantially fill the interior region of second open reservoir 14. Greater or fewer numbers of hollow tubes 46 are also possible depending on factors such as the size of second open reservoir 14, the thickness of hollow tubes 38, and the type of feed solution.

As discussed above, heated feed solution is delivered to feed loop 16. The heated feed solution enters first open reservoir 12 on the shell side via feed solution inlet 20 and travels towards feed solution outlet 22. As the heated feed solution travels from the inlet to the outlet, some of the heated feed solution passes along the plurality of hollow fiber membranes 38. At the same time, distillate, having been cooled by heat exchanger 52 in distillate loop 18, enters hollow fiber membranes 38 via first tank distillate inlet 54, and flows through the inner hollow regions of hollow fiber membranes 38 on the tube side toward first tank distillate outlet 40. As the cooled distillate flows through the inner bore of hollow fiber membranes 38, the temperature differentials between the interior and exterior surfaces of hollow fiber membranes 38 (the tube side and the shell side, respectively) create vapor pressure differentials across hollow fiber membranes 38 within first open reservoir 12. The vapor pressure differentials allow vapor from the feed solution in the first open reservoir 12 to be transported from the shell side of hollow fiber membranes 38 to the tube side of the same and condense as distillate. Distillate separates from the feed solution and passes across the hollow fiber membranes 38 from the shell side to the tube side. The distillate travels through the inner bore of hollow fiber membranes 38 to feed solution outlet 22. The distillate continues through distillate loop 18 to hollow tubes 46.

The feed solution generally remains in a liquid state while flowing through the first open reservoir 12. The generally hydrophobic exterior of the hollow fiber membranes 38 keeps feed solution from entering the membrane pores while allowing vapor transport from the shell side (reservoir side) to the tube side of hollow fiber membranes 38. Additionally, the pressure of the feed solution in first open reservoir 12 on hollow fiber membranes 38 is also less than the liquid penetration pressure of hollow fiber membranes 38. Thus, portions of the liquid feed solution cannot be forced through the micropores of hollow fiber membranes 38.

As discussed above, the elevated temperature of the feed solution on the shell side and the reduced temperature of the distillate on the tube side substantially increase the vapor pressure differentials across hollow fiber membranes 38, thereby increasing the separation rate of distillate from the feed solution. The vapor pressure differentials cause a portion of the distillate in the feed solution to evaporate and transmit through the micropores of hollow fiber membranes 38. When the vapor passes from first open reservoir 12 into the inner hollow regions of hollow fiber membranes 38, the cooled supply of distillate causes the vapor to condense near the pore entrances on the tube side of the hollow fiber membranes 38 and mix with the distillate. As discussed below, the membrane walls of the hollow fiber membranes 38 are generally hydrophobic. The hydrophobic walls of hollow fiber membranes 38 prevents distillate from reentering the membrane pores and rejoining the feed solution on the shell side of hollow fiber membranes 38. Due to the system pressure in distillate loop 18, the distillate flows toward first tank distillate outlet 40 once it enters the tube side.

As the distillate flows through the inner bore of hollow tubes 46, the temperature differentials between the interior and exterior surfaces of hollow tubes 46 allows for the transfer of thermal energy within second open reservoir 14. When the feed solution enters second open reservoir 14, it generally has a temperature lower than the distillate in the inner bore of hollow tubes 46 entering into second open reservoir 14. Because the hollow tubes are configured to transfer thermal energy, the warmer distillate releases thermal energy across the walls of hollow tubes 46. The feed solution in second open reservoir 14 on the shell side is thereby warmed and the distillate in hollow tubes 46 on the tube side is cooled. This reduces the thermal load on heat exchangers 34 and 52 with consequent savings in energy consumption. The distillate continues to flow through distillate loop 18 after it exits the inner bore of hollow tubes 46. A portion of the distillate is collected for storage or use by distillate discharge line 56. The remaining portion of distillate is recirculated through distillate loop 18, cooled by heat exchanger 52, and travels to the inner bore of hollow fiber membranes 38 as described above.

Open distillation system 10 is configured to operate under conditions where the shell side of first open reservoir 12 (the feed solution side) has a very low Reynolds number. Feed solution flowing through first open reservoir 12 is located on the shell side of open distillation system 10. Using the 1.2 cubic meter volume first open reservoir 12 described above, open distillation system 10 may be operated with a Reynolds number of about 34. Laboratory studies have demonstrated that adequate distillation has been shown with Reynolds numbers as low as 5 in one embodiment of open distillation system 10. Thus, embodiments of the present invention allow for distillation using low Reynolds numbers on the feed solution side.

In a given system, the Reynolds number is dependent on length, mean fluid velocity, and fluid viscosity as discussed above. Because length is a component in the Reynolds number calculation and first open reservoirs of varying sizes may be used, the Reynolds number of different embodiments may vary considerably. Despite this, embodiments of the present invention will generally have a Reynolds number lower than about 2100. Generally, for flow in a pipe, a Reynolds number of less than about 2100 indicates laminar flow. Reynolds numbers greater than 3000 generally indicate turbulent flow. Embodiments of the present invention allow for distillation in systems where the feed solution has a Reynolds number less than about 2100.

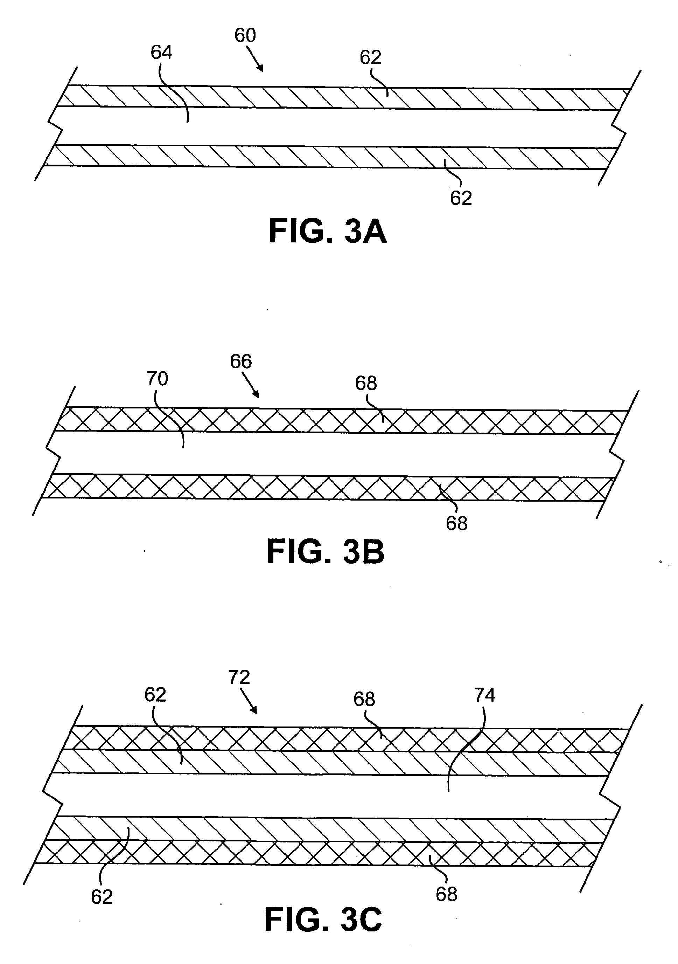

FIG. 3A is an expanded sectional view of membrane 60, which is an example of a single membrane of hollow fiber membranes 38 (shown in FIG. 2A). As shown in FIG. 3A, membrane 60 includes membrane wall 62 and inner hollow region 64. Membrane wall 62 is generally formed from one or more hydrophobic materials and includes a plurality of micropores (not shown) that allow the transmission of gases and vapors, but restrict the flow of liquids and solids. This allows the evaporated distillate to separate from the feed solution via vapor pressure transport. Examples of suitable materials for membrane wall 62 include hydrophobic polymeric materials, such as polypropylenes, polyethylenes, polytetrafluoroethylenes, polyvinylidene difluorides, Halar® ECTFE (ethylene chlorotrifluoroethylene, available from Solvay Solexis, Brussels, Belgium) and combinations thereof. Other suitable materials may include non-hydrophobic polymer materials, such as polysulfones, polyethersulfones, and polyimides that are coated with hydrophobic material(s). Examples of particularly suitable materials for membrane wall 62 include thermally-resistant polymeric materials, such as polytetrafluoroethylenes, polyvinylidene difluorides, and combinations thereof. Examples of suitable wall thicknesses for membrane wall 62 range from about 50 micrometers to about 500 micrometers, with particularly suitable wall thicknesses ranging from about 100 micrometers to about 250 micrometers.

As discussed above, the pressure of the feed solution in first open reservoir 12 on hollow fiber membranes 38 is also less than the liquid penetration pressure of membrane wall 62 of membrane 60. The liquid penetration pressure of membrane wall 62 is generally dependent on the composition of membrane wall 62 and on the sizes of the micropores of membrane wall 62. Examples of suitable average micropore sizes for membrane wall 62 range from about 0.1 micrometers to about 0.6 micrometers, with particularly suitable average micropore sizes ranging from about 0.2 micrometers to about 0.4 micrometers.

FIG. 3B is an expanded sectional view of non-porous hollow tube 66, which is an example of a single hollow tube 46 (shown in FIG. 2B). As shown in FIG. 3B, non-porous hollow tube 66 includes a non-porous and solid wall 68 and inner hollow region 70. Solid wall 68 is made up of a non-porous material that blocks the transmission of gases and vapors, thereby preventing mass (fluid) transfer across non-porous hollow tube 66. Suitable materials for non-porous hollow tubes 66 include polymeric materials that possess high thermal conductivity and are stable to heat and aqueous solutions. Examples of suitable materials include the suitable polymeric materials discussed above for membrane wall 62. Other suitable materials may include materials that can tolerate the thermal stress provided by the system and are resistant to corrosion in aqueous environments. Examples include metals, such as stainless steel.

FIG. 3C is an expanded sectional view of coated hollow tube 72, which is another example of a single hollow tube 46. As shown in FIG. 3C, coated hollow tube 72 includes inner hollow region 74, a membrane wall 62 like that of membrane 60, and a non-porous and solid wall 68 like that of non-porous hollow tube 66. Non-porous and solid wall 68 surrounds membrane wall 62 so that transmission of gases and vapors is blocked. Suitable materials for membrane wall 62 and non-porous and solid wall 68 of coated hollow tube 72 are described above.

Although the present invention has been described with reference to exemplary embodiments, workers skilled in the art will recognize that changes may be made in form and detail without departing from the scope of the invention which is defined by the claims.

**Claims**

**1.** A distillation system (10) for separating a distillate from a feed solution, the system comprising:

first (12) and second (14) reservoirs open to the atmosphere;
a feed loop (16) configured to circulate a feed solution to the first and second reservoirs;
a distillate loop (18) configured to circulate distillate comprising:

a first distillate inlet manifold (54);
a first distillate outlet manifold (40);
a plurality of hollow fiber membranes (38) extending from the first distillate inlet manifold to the first distillate outlet manifold and through at least a portion of the first reservoir (12), wherein the hollow fiber membranes are configured to allow vapor transmission therethrough;
a second distillate inlet manifold (44);
a second distillate outlet manifold (48);
a plurality of hollow tubes (46) extending from the second distillate inlet manifold to the second distillate outlet manifold and through at least a portion of the second reservoir (14), wherein the hollow tubes are configured to substantially prevent vapor transmission therethrough, and further configured to allow transmission of thermal energy therethrough.

2. The system of claim 1, wherein the first distillate outlet manifold (40) is in fluid communication with the second distillate inlet manifold (44) and the second distillate outlet manifold (48) is in fluid communication with the first distillate inlet manifold (54).

3. The system of claim 1 or 2, wherein the hollow fiber membranes (38) comprise a microporous membrane wall (62).

4. The system of claim 3, wherein the microporous membrane wall (62) is formed from at least one polymeric material chosen from the group of polypropylenes, polyethylenes, polysulfones, polyethersulfones, polyimides, polytetrafluoroethylenes, polyvinylidene difluorides, ethylene chlorotrifluoroethylene and combinations thereof.

5. The system of claim 3 or 4, wherein the hollow fiber membranes (38) have an average micropore size ranging from about 0.1 micrometers to about 0.6 micrometers.

6. The system of claim 1, 2, 3, 4 or 5, wherein the hollow tubes (46) are formed from a non-porous material (68).

7. The system of claim 1, 2, 3, 4 or 5, wherein the hollow tubes (46) comprise a microporous membrane wall (62) and a polymeric coating (68) disposed on the microporous membrane wall.

8. The system of any preceding claim, wherein the feed loop (16) comprises a heat exchanger (34) configured to heat the feed solution to a temperature ranging from about 50 °C to less than about 100 °C; preferably wherein the feed loop (16) comprises a heat exchanger (34) configured to heat the feed solution to a temperature ranging from about 70 °C to about 90 °C.

9. The system of any preceding claim, wherein the distillate loop (18) comprises a heat exchanger (52) configured to cool distillate to a temperature ranging from about 5 °C to about 75 °C; preferably wherein the distillate loop (18) comprises a heat exchanger (52) configured to cool distillate to a temperature ranging from about 20 °C to about 55 °C.

10. The system of any preceding claim, wherein the first reservoir (12) contains at least one baffle (58) for directing the flow of the feed solution.

11. The system of any preceding claim, wherein the second reservoir (14) contains at least one baffle for directing the flow of the feed solution.

12. The system of any preceding claim, wherein the first (12) and second (14) reservoirs are covered.

13. A method for separating a distillate from a feed solution, the method comprising:

introducing the feed solution into a feed loop (16);
heating the feed solution;
circulating the feed solution through a first reservoir (12) open to the atmosphere and containing a plurality of hollow fiber membranes (38) configured to allow transmission of distillate so that distillate is transferred from the first reservoir to interior regions of the hollow fiber membranes;
circulating distillate collected in the hollow fiber membranes to a plurality of hollow tubes (46);
circulating the feed solution through a second reservoir (14) open to the atmosphere and containing the plurality of hollow tubes configured to substantially prevent vapor transmission and further configured to allow transmission of thermal energy so that thermal energy is transferred from the hollow tubes to the feed solution in the second reservoir;
cooling the distillate after the distillate exits the hollow tubes; and
circulating the distillate to the hollow fiber membranes (38).

14. The method of claim 13, wherein the feed solution is heated to a temperature ranging from about 50 °C to less than about 100 °C; preferably
wherein the feed solution is heated to a temperature ranging from about 70 °C to about 90 °C.

15. The method of claim 13 or 14, wherein the distillate is cooled to a temperature ranging from about 5 °C to about 75 °C; preferably
wherein the distillate is cooled to a temperature ranging from about 20 °C to about 55 °C.

**FIG. 1**

**FIG. 2A**

**FIG. 2B**

**FIG. 2C**

**FIG. 3A**

**FIG. 3B**

**FIG. 3C**